# DEMANDE DE BREVET EUROPEEN

(11) **EP 4 303 589 A1**
(43) Date de publication de la demande: **10.01.2024**
(21) Numéro de dépôt: 23177859.8
(22) Date de dépôt: 07.06.2023
(51) Int. Cl.: G01N 35/00, B01L 3/00, G01N 1/36, G01N 1/31

(54) **PROCÉDÉ ET ÉQUIPEMENT POUR LA TRAÇABILITÉ DE PRÉLÈVEMENTS BIOLOGIQUES**

(30) Priorité: 05.07.2022 FR 2206858
(71) Demandeur: Dreampath Diagnostics, 67100 Strasbourg (FR)
(72) Inventeur: JORDAN NAVAS, Pablo, 28016 MADRID (ES); WILHELM, Valérie, 67114 ESCHAU (FR)
(74) Mandataire: Hugues, Catherine

(57) **Abrégé**

L'invention a pour objet un équipement (10) pour la traçabilité de prélèvements biologiques placés dans des cassettes d'inclusion (1) elles-mêmes rangées dans des paniers (3, 4, 5, 6, 7), ledit équipement comportant :
- au moins un appareil (8) équipé de moyens de détection et de lecture de données encodées (2) et des moyens de pilotage des moyens de détection et de lecture de données encodées,

- des moyens de traitement informatique configurés pour déterminer une zone de travail optimale des moyens de détection et de lecture de données encodées, en fonction du modèle de panier (3, 4, 5, 6, 7) hébergeant lesdites cassettes (1), générer un signal représentatif de ladite zone et transmettre l'information correspondante aux moyens de pilotage des moyens de détection et de lecture des données encodées.

Il est caractérisé en ce qu'il comporte des moyens (11) de capture d'images configurés pour capturer et transmettre aux moyens de traitement informatiques au moins une image d'au moins une portion du panier (3, 4, 5, 6, 7), et en ce que les moyens de traitement informatiques sont configurés pour rechercher, dans l'image capturée, une spécificité structurelle propre à un panier (3, 4, 5, 6, 7) et identifier le modèle du panier (3, 4, 5, 6, 7) hébergeant lesdites cassettes d'inclusion (1) et déterminer la zone de travail optimale correspondante des moyens de détection et de lecture de données encodées.

## Description

La présente invention a pour objet un procédé et un équipement pour la traçabilité de prélèvements biologiques placés dans des cassettes d'inclusion.

Dans le cadre de la prise en charge médicale d'un patient ou celui de travaux de recherche dans le domaine humain, animal ou végétal, des prélèvements tissulaires ou cellulaires sont couramment effectués en vue d'une analyse histologique et/ou moléculaire, destinée ou non à l'établissement d'un diagnostic.

Afin de permettre une parfaite visualisation au microscope des structures cellulaires ou tissulaires analysées, de tels prélèvements font l'objet d'une préparation préalable comportant différentes étapes.

De manière résumée, au cours de ces dernières, les échantillons frais, disposés dans des pots d'échantillonnage remplis de formol lors de leur prélèvement, sont transférés dans des cassettes d'inclusion ajourées, pour subir une phase de déshydratation, puis une étape d'inclusion en paraffine conduisant à des blocs d'échantillons biologiques. Des coupes fines et régulières, prélevées à partir des blocs, sont ensuite étalées sur des lames porte-objet, subissent encore différents traitements destinés à colorer les éléments structurels pour permettre leur lecture au microscope, et sont finalement recouvertes d'une résine et d'une lamelle assurant leur protection lors des différentes manipulations ultérieures.

Toutes ces étapes de préparation des échantillons biologiques en vue de leur analyse supposent de nombreuses manipulations au cours desquelles des mesures pour en assurer la traçabilité, doivent être mises en oeuvre.

Des solutions automatisées ont d'ores et déjà été proposées à cet effet, en particulier en ce qui concerne la traçabilité des échantillons biologiques stockés dans des blocs de paraffine ou sur des lames porte-objet.

Pour rappel, de manière classique, lors de son prélèvement, chaque échantillon biologique se voit attribuer un numéro de référence unique, fourni par le système informatique de l'établissement ayant procédé à son prélèvement. Ce numéro le lie au patient dont il provient et va le suivre jusqu'à sa destruction, sous forme de données encodées, de type code à barres, code matriciel, puce RFID, apposées sur ses différents supports de stockage, au fur et à mesure de leur préparation.

Comme évoqué ci-dessus, une étape du processus de préparation des matières biologiques en vue de leur analyse consiste à les déshydrater au moyen d'un appareil dédié, couramment appelé « automate de déshydratation », et à remplacer l'eau contenue dans leurs cellules par de la paraffine, afin d'obtenir des blocs dont des coupes fines pourront ensuite être prélevées. Pour accomplir cette étape, les échantillons sont placés individuellement dans des cassettes ajourées, munies des données d'identification des échantillons, et elles-mêmes regroupées dans des paniers facilitant leur manipulation, fournis avec les « automates de déshydratation » et dont différents modèles sont disponibles, se différenciant les uns des autres par leur forme et/ou leurs dimensions.

Aux fins de traçabilité, lorsque les paniers sont remplis de cassettes, il est d'usage de vérifier si le nombre de cassettes présentes dans chaque panier correspond bien au nombre de cassettes susceptibles d'avoir été préparées. En cas de différence, une recherche d'erreur peut ainsi être effectuée, afin de retrouver le cas échéant une cassette oubliée sur une paillasse avec son contenu, ou de s'assurer que l'ensemble des prélèvements réceptionnés par le laboratoire ont été placés dans les cassettes et ont par conséquent été traités. Le délai de conservation des échantillons dans le formol étant très court, un tel contrôle s'avère en effet indispensable pour éviter toute perte de matière involontaire.

De toute évidence, exécuter cette vérification de manière manuelle se révèle particulièrement fastidieux et chronophage, au vu du nombre toujours plus élevé de cassettes à manipuler, induit notamment par la croissance du taux d'incidence de certaines maladies, telles que notamment le cancer.

Dès lors, le présent demandeur a d'ores et déjà proposé un équipement, décrit dans la publication EP 3 795 253, définissant une solution rationnelle pour pallier les problèmes résultants de l'obsolescence des méthodes de traçabilité manuelles, gérer de manière efficace et fiable les cassettes d'inclusion lors de l'étape de déshydratation des échantillons biologiques, et qui soit compatible avec l'ensemble des modèles de paniers pour « automates de déshydratation » existants.

La présente invention s'inscrit dans le même contexte et a pour but de proposer une solution alternative à celle décrite dans le document EP 3 795 253, qui permette une mise en oeuvre encore plus rapide et efficace des opérations de traçabilité menées par le personnel susceptible d'intervenir lors de la phase de déshydratation des échantillons biologiques placés dans des cassettes d'inclusion, et ainsi éviter tout risque d'erreur, ou de perte de matériel pour finalement garantir l'établissement de diagnostics fiables attribués au bon patient.

A cet effet, la présente invention concerne un équipement pour la traçabilité de prélèvements biologiques placés dans des cassettes d'inclusion présentant une face d'identification munie de données encodées et rangées, leurs faces d'identification respectives étant toutes visibles, dans des paniers, dont il existe plusieurs modèles se différenciant les uns des autres par leur forme générale et/ou leurs dimensions, ledit équipement comportant :
- au moins un appareil équipé de moyens de détection et de lecture de données encodées configurés pour détecter et lire, au cours d'une même séance de lecture, les données encodées apposées sur des cassettes contenues dans au moins un panier et des moyens de pilotage des moyens de détection et de lecture de données encodées,
- des moyens de traitement informatique configurés pour déterminer, de manière automatique, une zone de travail optimale des moyens de détection et de lecture de données encodées, en fonction du modèle de panier hébergeant lesdites cassettes d'inclusion, générer un signal représentatif de ladite zone et transmettre l'information correspondante aux moyens de pilotage des moyens de détection et de lecture des données encodées,
caractérisé en ce qu'il comporte des moyens de capture d'images configurés pour capturer et transmettre aux moyens de traitement informatiques au moins une image d'au moins une portion du panier hébergeant les cassettes d'inclusion, et en ce que les moyens de traitement informatiques sont configurés pour rechercher dans l'image capturée une spécificité structurelle propre à un modèle de panier et identifier, à partir de l'image capturée de la portion du panier, le modèle du panier hébergeant lesdites cassettes d'inclusion et déterminer la zone de travail optimale correspondante des moyens de détection et de lecture de données encodées.

Conformément à une caractéristique particulière de l'équipement selon l'invention, les moyens de capture d'images définissent les moyens de détection et de lecture de données encodées.

L'invention concerne également un procédé pour la traçabilité de prélèvements biologiques placés dans des cassettes d'inclusion présentant une face d'identification munie de données encodées et rangées, leurs faces d'identification respectives étant toutes visibles, dans des paniers dont il existe plusieurs modèles se différenciant les uns des autres par leur forme générale et/ou leurs dimensions, ledit procédé étant mis en oeuvre au moyen d'une installation telle que précédemment décrite et comportant les étapes consistant à :
- déterminer de manière automatique, au travers de moyens de traitement informatiques, une zone de travail optimale de moyens de détection et de lecture de données encodées en fonction du modèle de panier hébergeant les cassettes d'inclusion,
- Détecter et lire des données encodées au travers des moyens de détection et de lecture de données encodées uniquement au niveau de la zone de travail optimale préalablement déterminée, caractérisé en en ce que pour déterminer la zone de travail optimale des moyens de détection et de lecture de données encodées, on réalise les étapes suivantes :

- on enregistre dans des moyens mémoire des moyens de traitement informatiques, de manière associée pour chaque modèle de panier, des informations relatives à au moins une spécificité structurelle lui étant propre, des informations relatives à une zone de travail optimale, pour ce même panier, de moyens de détection et de lecture de données encodées, et/ou des informations relatives à sa forme générale et ses dimensions,
- on dispose au moins un panier contenant des cassettes d'inclusion dont les faces munies de données d'identification sont visibles, dans le champ de lecture de moyens de capture d'images,
- on acquiert à partir des moyens de capture d'images, au moins une image d'au moins une portion susceptible de présenter une spécificité structurelle de ce même panier et on la transmet aux moyens de traitement informatique,
- on recherche dans ladite image, à l'aide des moyens de traitement informatique, la présence d'une spécificité structurelle,
- en cas de détection d'une spécificité structurelle, on recherche dans les moyens-mémoire des informations relatives à la zone de travail optimale correspondante des moyens de détection et de lecture de données encodées, et/ou la forme et les dimensions du panier correspondant et on active les moyens de détection et de lecture des données encodées sur la zone optimale uniquement, ou
- en cas d'absence de détection d'une spécificité structurelle, on détermine au moins un ordre de grandeur d'une longueur d'un côté du panier, on recherche dans les moyens-mémoire des informations relatives à la zone de travail optimale correspondante des moyens de détection et de lecture de données encodées, et on active les moyens de détection et de lecture des données encodées sur la zone optimale uniquement.

Le procédé selon l'invention se caractérise également en ce que lors de l'étape de capture d'image on acquiert une image en niveaux de gris.

Une caractéristique additionnelle du procédé selon l'invention est définie par le fait que pour rechercher certaines spécificités structurelles dans ladite image on supprime l'arrière-plan de l'image.

D'autre part, pour déterminer un ordre de grandeur d'une longueur d'un côté du panier, il peut être prévu, dans la cadre du présent procédé, de relever un nombre de pixels blancs sur l'image capturée.

Une autre caractéristique du présent procédé consiste en ce que pour détecter et lire des données encodées, on subdivise la zone optimale préalablement déterminée en plusieurs sous-zones contenant chacune une pluralité de logements de présence potentielle de cassettes d'inclusion et on détecte et lit les données encodées logement après logement.

Par ailleurs, une autre caractéristique avantageuse du présent procédé est définie par le fait que lors de l'étape de détection et de lecture des données encodées, on récupère sur une interface utilisateur, pour chaque logement, un signal représentatif du succès ou, le cas échéant de l'échec de la détection et de la lecture de données encodées au niveau dudit logement.

Les dessins annexés illustrent l'invention :
[Fig.1], [Fig.2], [Fig. 3], [Fig. 4], [Fig. 5] représentent des vues schématiques de dessus de différents modèles de paniers pour stocker des cassettes d'inclusion lors de l'étape de déshydratation des prélèvements biologiques, et
[Fig. 6] représente une vue schématique d'un équipement selon l'invention.

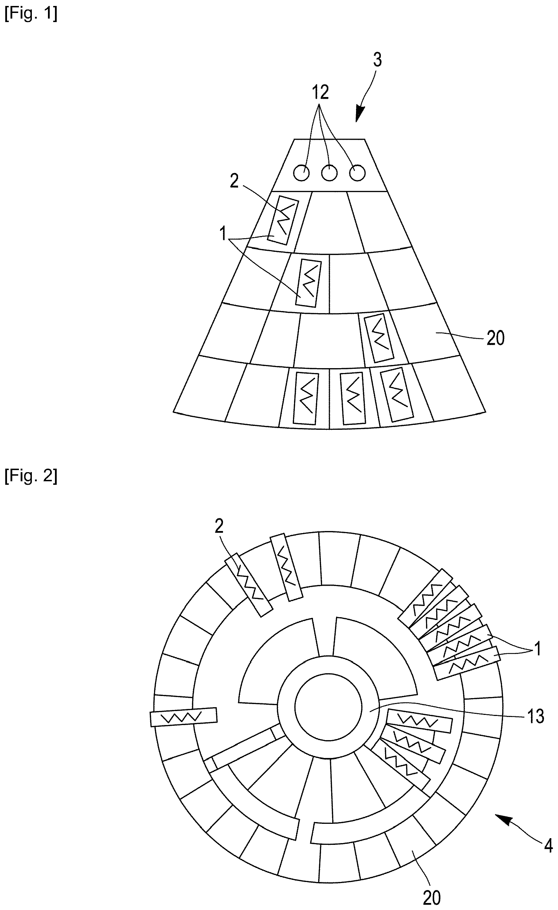

Comme indiqué ci-dessus, la présente invention concerne un équipement 10 et un procédé pour la traçabilité de prélèvements biologiques placés dans des cassettes d'inclusion 1 présentant une face d'identification munie de données encodées 2 et rangées, leurs faces d'identification respectives étant visibles, dans des paniers dont il existe plusieurs modèles, tels que notamment ceux 3, 4, 5, 6, 7, illustrés aux figures 1 à 5, se différenciant les uns des autres par leur forme générale et/ou leurs dimensions.

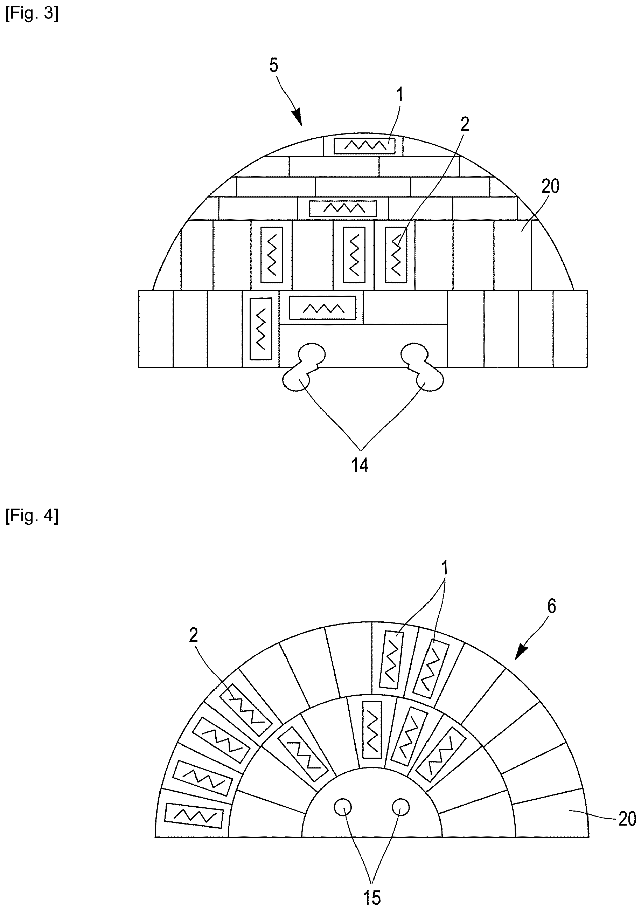

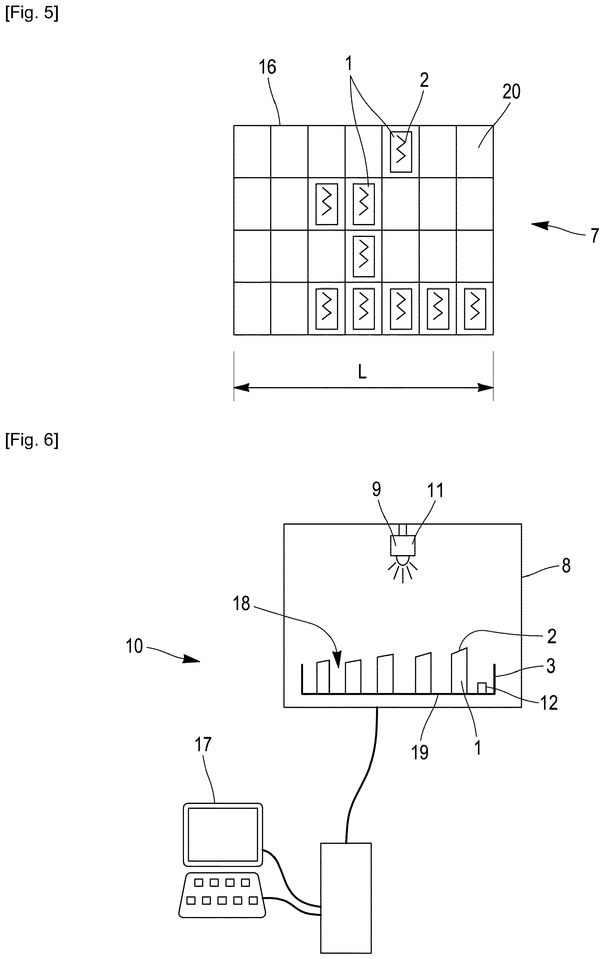

Pour rappel, de manière classique, de tels paniers 3, 4, 5, 6, 7 sont commercialisés avec les appareils appelés « automates de déshydratation », utilisés pour déshydrater des échantillons biologiques placés dans des cassettes d'inclusion 1. Ils présentent une structure déterminée par leur fabricant, pouvant par exemple correspondre à une forme trapézoïdale (cf. fig. 1), une forme circulaire (cf. fig.2), une forme en demi-lune (cf. fig. 3 et 4), une forme parallélépipédique (cf. fig. 5), ou encore toute autre forme permettant de ranger de manière ordonnancée une pluralité de cassettes d'inclusion 1.

A ce propos, et tel que visible aux figures 1 à 5, une manière ordonnancée de ranger les cassettes d'inclusion 1 consiste couramment à les positionner dans des logements individuels 20 que comportent les paniers 3, 4, 5, 6, 7, de manière telle que leurs faces munies des données d'identification encodées 2 soient visibles et pointent par exemple vers l'ouverture d'entrée 18 de chaque panier 3, 4, 5, 6, 7, s'étendant dans un plan d'allure parallèle au fond 19 du panier.

D'autre part, l'équipement 10 selon l'invention comporte encore de manière classique, un appareil 8 équipé de moyens 9 de détection et de lecture de données encodées, configurés pour détecter et lire, au cours d'une même séance de détection et de lecture, les données encodées 2 apposées sur des cassettes d'inclusion 1 contenues dans au moins un panier 3, 4, 5, 6, 7 ainsi que des moyens de pilotage de tels moyens 9 de détection et de lecture de données encodées.

Conformément à l'invention, l'équipement 10 comporte en outre des moyens de traitement informatique configurés pour déterminer, de manière automatique, une zone de travail optimale des moyens 9 de détection et de lecture de données encodées, en fonction du modèle de panier 3, 4, 5, 6, 7 hébergeant les cassettes d'inclusion 1, générer un signal représentatif de ladite zone de travail optimale et transmettre l'information correspondante aux moyens de pilotage des moyens 9 de détection et de lecture des données encodées.

Une telle configuration a pour avantage de permettre une détection et par conséquent une lecture plus rapides des codes d'identification 2 que comportent les cassettes d'inclusion 1 présentes dans un panier 3, 4, 5, 6, 7. En effet, ces opérations seront uniquement mises en oeuvre par les moyens de détection et de lecture de données encodées sur la zone de travail optimale préalablement déterminée, qui correspond avantageusement à une zone de présence potentielle de cassettes d'inclusion 1, propre à chaque modèle de panier 3, 4, 5, 6, 7 disponible. D'autre part, la surface de détection et de lecture étant réduite, une telle caractéristique permet également de limiter le nombre d'opérations de vérification manuelle susceptibles d'être effectuées par des opérateurs, en cas d'absence de lecture de code par les moyens 9 de détection et de lecture de données encodées.

Il convient de noter que dans le cadre de l'invention, pour déterminer la zone de travail optimale des moyens 9 de détection et de lecture de données encodées, il a plus spécifiquement été prévu de munir d'une part l'équipement 1 de moyens de capture d'images, tels que par exemple une caméra 11, le cas échéant adaptée pour définir également les moyens 9 de détection et de lecture de données encodées, et destinée à capturer et transmettre aux moyens de traitement informatiques au moins une image d'au moins une portion du panier 3, 4, 5, 6, 7 hébergeant les cassettes d'inclusion 1. D'autre part, l'invention a également prévu de configurer à cet effet les moyens de traitement informatiques de manière telle qu'ils recherchent, dans l'image capturée, une spécificité structurelle propre à un modèle de panier et qu'ils déterminent, à partir de l'identification de la spécificité structurelle identifiée, la zone de travail optimale correspondante des moyens de détection et de lecture de données encodées.

Ainsi, en pratique, l'invention a prévu d'enregistrer d'abord dans des moyens mémoire des moyens de traitement informatiques, de manière associée pour chaque modèle de panier 3, 4, 5, 6, 7, des informations relatives à au moins une spécificité structurelle lui étant exclusivement propre, ainsi que des informations relatives à une zone de travail optimale, pour ce même panier, des moyens de détection et de lecture de données encodées, et/ou également des informations relatives à sa forme générale et ses dimensions.

Plus précisément, en référence aux figures 1 à 5, dans le cadre de l'invention, la présence, sur une portion d'un panier, de trois ergots 12 correspond à une information associée exclusivement au modèle de panier 3 et aux informations relatives à une zone de travail optimale des moyens de détection et de lecture de données encodées correspondant à ce même modèle de panier 3, et/ou aux informations quant à sa forme d'allure triangulaire et ses dimensions.

De même, la présence d'une protubérance centrale de forme cylindrique 13 correspond à une information associée exclusivement au modèle de panier 4 et aux informations relatives à une zone de travail optimale correspondante des moyens de détection et de lecture de données encodées, et/ou aux informations représentatives de sa forme générale circulaire et ses dimensions.

Également, la présence sur une portion d'un panier de deux pions 14 est une information associée exclusivement au modèle de panier 5 et aux informations relatives à une zone de travail optimale pour ce même modèle des moyens de détection et de lecture de données encodées, et/ou aux informations relatives à sa forme en demi-lune et ses dimensions lui permettant d'accueillir un nombre x de cassettes d'inclusion 1.

D'autre part, la présence de deux ergots 15 correspond à une information associée exclusivement au modèle de panier 6 et aux informations relatives à une zone de travail optimale pour ce même modèle des moyens de détection et de lecture de données encodées, et/ou aux informations relatives à sa forme en demi-lune et ses dimensions lui permettant d'accueillir un nombre y de cassettes d'inclusion 1.

Enfin, une longueur L1, L2, L3,..., Ln donnée d'un côté 16 correspond à une information associée exclusivement à un modèle de panier 7, et aux informations relatives à une zone de travail optimale correspondante des moyens de détection et de lecture de données encodées, et/ou aux informations relatives à sa forme parallélépidéque et ses dimensions lui permettant d'accueillir un nombre z1, z2, z3, zn de cassettes d'inclusion 1.

En somme, en ce qui concerne le modèle de panier 7, de forme générale parallélépipédique, la présente invention a prévu de déduire sa présence de l'absence de détection d'une spécificité structurelle représentative d'un des autres modèles de panier 3, 4, 5, 6 et de déterminer la zone de travail optimale des moyens de détection et de lecture de données encodées en réalisant une mesure d'une longueur L d'un de ses côtés 16.

Sur la base de ce qui précède, après avoir effectué cette étape préliminaire d'enregistrement de manière associée pour chaque modèle de panier 3, 4, 5, 6, 7 des informations relatives à au moins une spécificité structurelle lui étant propre, et des informations relatives à une zone de travail optimale, pour ce même panier 3, 4, 5, 6, 7, de moyens de détection et de lecture de données encodées, et/ou des informations relatives à sa forme générale et ses dimensions, la mise en oeuvre de l'équipement 1 consiste à :
- disposer un panier 3, 4, 5, 6, 7 contenant des cassettes d'inclusion 1 dans le champ de lecture de la caméra 11 de l'appareil 8, les faces des cassettes 1 munies des données d'identification 2 étant ainsi détectables par la caméra 11,
- acquérir à partir de la caméra 11, au moins une image, de préférence en niveaux de gris, d'au moins une portion susceptible de présenter le cas échéant trois ergots 12, une protubérance cylindrique 13, deux pions 14, deux ergots 15, ou un côté 16 de longueur L et transmettre cette image aux moyens de traitement informatique,
- rechercher dans ladite image, à l'aide des moyens de traitement informatique, et le cas échéant après avoir procédé à une suppression de l'arrière-plan, la présence le cas échéant de trois ergots 12, d'une protubérance cylindrique 13, de deux pions 14 ou de deux ergots 15, puis
- en cas de détection le cas échéant de trois ergots 12, d'une protubérance cylindrique 13, de deux pions 14 ou de deux ergots 15, de rechercher dans les moyens-mémoire des informations relatives à la zone de travail optimale correspondante des moyens de détection et de lecture de données encodées et/ou la forme et les dimensions du panier 3, 4, 5, 6 correspondant, et d'activer en conséquence les moyens de détection et de lecture des données encodées sur la zone optimale uniquement, ou
- en cas d'absence de détection le cas échéant de trois ergots 12, d'une protubérance cylindrique 13, de deux pions 14 ou de deux ergots 15, de déterminer au moins un ordre de grandeur d'une longueur L d'un côté 16 du panier 7, de préférence en relevant un nombre de pixels blancs sur l'image capturée, puis de rechercher dans les moyens-mémoire des informations relatives à la zone de travail optimale correspondante des moyens de détection et de lecture de données encodées, et d'activer en conséquence les moyens de détection et de lecture des données encodées sur la zone optimale uniquement.

Il est par ailleurs précisé qu'une autre caractéristique du présent procédé consiste en ce que pour détecter et lire les données encodées 2 apposées sur des cassettes d'inclusion 1 contenues dans un panier 3, 4, 5, 6, 7, on subdivise la zone optimale préalablement déterminée en plusieurs sous-zones contenant chacune une pluralité de logements individuels 20 de présence potentielle de cassettes d'inclusion 1 et on détecte et lit les données encodées logement 20 après logement 20.

De plus, de manière avantageuse, lors de l'étape de détection et de lecture des données encodées, le procédé selon l'invention prévoit une étape de récupération sur une interface utilisateur 17, pour chaque logement 20, d'un signal représentatif du succès ou, le cas échéant de l'échec de la détection et de la lecture de données encodées au niveau dudit logement 20, permettant le cas échéant à l'opérateur de localiser d'un seul coup d'oeil rapide d'éventuelles erreurs de lecture de code et de procéder aux vérifications requises.

## Revendications

1. Équipement (10) pour la traçabilité de prélèvements biologiques placés dans des cassettes d'inclusion (1) présentant une face d'identification munie de données encodées (2) et rangées, leurs faces d'identification respectives étant visible, dans des paniers (3, 4, 5, 6, 7), dont il existe plusieurs modèles se différenciant les uns des autres par leur forme générale et/ou leurs dimensions, ledit équipement comportant :
- au moins un appareil (8) équipé de moyens de détection et de lecture de données encodées (2) configurés pour détecter et lire, au cours d'une même séance de lecture, les données encodées apposées sur des cassettes (1) contenues dans au moins un panier (3, 4, 5, 6, 7) et des moyens de pilotage des moyens de détection et de lecture de données encodées,
- des moyens de traitement informatique configurés pour déterminer, de manière automatique, une zone de travail optimale des moyens de détection et de lecture de données encodées, en fonction du modèle de panier (3, 4, 5, 6, 7) hébergeant lesdites cassettes d'inclusion (1), générer un signal représentatif de ladite zone et transmettre l'information correspondante aux moyens de pilotage des moyens de détection et de lecture des données encodées,
**caractérisé en ce qu'**il comporte des moyens (11) de capture d'images configurés pour capturer et transmettre aux moyens de traitement informatiques au moins une image d'au moins une portion du panier (3, 4, 5, 6, 7) hébergeant les cassettes d'inclusion (1), et **en ce que** les moyens de traitement informatiques sont configurés pour rechercher, dans l'image capturée, une spécificité structurelle propre à un panier (3, 4, 5, 6, 7) et identifier à partir de l'image capturée de la portion du panier, le modèle du panier (3, 4, 5, 6, 7) hébergeant lesdites cassettes d'inclusion (1) et déterminer la zone de travail optimale correspondante des moyens de détection et de lecture de données encodées.

2. Équipement (10) selon la revendication 1, **caractérisé en ce que** les moyens de capture d'images définissent les moyens de détection et de lecture de données encodées.

3. Procédé pour la traçabilité de prélèvements biologiques placés dans des cassettes d'inclusion (1) présentant une face d'identification munie de données encodées (2) et rangées, leurs faces d'identification respectives étant toutes visibles, dans des paniers (3, 4, 5, 6, 7) dont il existe plusieurs modèles se différenciant les uns des autres par leur forme générale et/ou leurs dimensions, ledit procédé étant mis en oeuvre au moyen d'une installation selon l'une des revendications 1 à 2 et comportant les étapes consistant à :
- déterminer de manière automatique, au travers de moyens de traitement informatiques, une zone de travail optimale de moyens de détection et de lecture de données encodées en fonction du modèle de panier (3, 4, 5, 6, 7) hébergeant les cassettes d'inclusion (1),
- détecter et lire des données encodées au travers des moyens de détection et de lecture de données encodées uniquement au niveau de la zone de travail optimale préalablement déterminée,
**caractérisé en ce que** pour déterminer la zone de travail optimale des moyens de détection et de lecture de données encodées, on réalise les étapes suivantes :
- on enregistre dans des moyens mémoire des moyens de traitement informatiques, de manière associée pour chaque modèle de panier (3, 4, 5, 6, 7), des informations relatives à au moins une spécificité structurelle lui étant propre, des informations relatives à une zone de travail optimale, pour ce même panier (3, 4, 5, 6, 7), de moyens de détection et de lecture de données encodées, et/ou des informations relatives à sa forme générale et ses dimensions,
- on dispose au moins un panier (3, 4, 5, 6, 7) contenant des cassettes d'inclusion (1) dont les faces munies de données d'identification (2) sont visibles, dans le champ de lecture de moyens (11) de capture d'images,
- on acquiert à partir des moyens (11) de capture d'images, au moins une image d'au moins une portion susceptible de présenter une spécificité structurelle de ce même panier (3, 4, 5, 6, 7) et on la transmet aux moyens de traitement informatique,
- on recherche dans ladite image, à l'aide des moyens de traitement informatique, la présence d'une spécificité structurelle (12, 13, 14, 15),
- en cas de détection d'une spécificité structurelle (12, 13, 14, 15), on recherche dans les moyens-mémoire des informations relatives à la zone de travail optimale correspondante des moyens de détection et de lecture de données encodées, et/ou la forme et les dimensions du panier (3, 4, 5, 6) correspondant et on active les moyens de détection et de lecture des données encodées sur la zone optimale uniquement, ou
- en cas d'absence de détection d'une spécificité structurelle, on détermine au moins un ordre de grandeur d'une longueur L d'un côté (16) du panier (7), on recherche dans les moyens-mémoire des informations relatives à la zone de travail optimale correspondante des moyens de détection et de lecture de données encodées, et on active les moyens de détection et de lecture des données encodées sur la zone de travail optimale uniquement.

4. Procédé selon la revendication précédente, **caractérisé en ce que** lors de l'étape de capture d'image on acquiert une image en niveaux de gris.

5. Procédé selon l'une quelconque des revendications 3 ou 4, **caractérisé en ce que** pour rechercher certaines spécificités structurelles dans ladite image on supprime l'arrière-plan de l'image.

6. Procédé selon l'une quelconque des revendications 3 à 5, **caractérisé en ce que** pour déterminer un ordre de grandeur d'une longueur L d'un côté (16) du panier (7), on relève un nombre de pixels blancs sur l'image capturée.

7. Procédé selon l'une quelconque des revendications 3 à 6, **caractérisé en ce que** pour détecter et lire des données encodées, on subdivise la zone optimale préalablement déterminée en plusieurs sous-zones contenant chacune une pluralité de logements de présence potentielle de cassettes d'inclusion et on détecte et lit les données encodées logement après logement.

8. Procédé selon la revendication 7, **caractérisé en ce que** lors de l'étape de détection et de lecture des données encodées, on récupère sur une interface utilisateur (17), pour chaque logement, un signal représentatif du succès ou, le cas échéant de l'échec de la détection et de la lecture de données encodées au niveau dudit logement.
